# EUROPEAN PATENT APPLICATION

(11) **EP 4 372 981 A1**
(43) Date of publication of application: **22.05.2024**
(21) Application number: 23382289.9
(22) Date of filing: 28.03.2023
(51) Int. Cl.: H02S 20/00, F24S 20/70

(54) **FLOATING SYSTEM FOR PHOTOVOLTAIC PANELS**

(30) Priority: 15.11.2022 WO PCT/ES2022/070736
(71) Applicant: Isigenere, S.L., 03460 Beneixama (ES)
(72) Inventor: PONS PUIG, Emilio, 03460 Beneixama (ES); REDÓN SANTAFE, Miguel, 03460 Beneixama (ES); DEL VECCHIO, Miguel Ángel, 03460 Beneixama (ES); GÓMEZ GONZALEZ, Antonio, 03460 Beneixama (ES)
(74) Representative: Elzaburu S.L.P.

(57) **Abstract**

A floating system (1) for photovoltaic panels (6), comprising:
- a series of float-photovoltaic panel assemblies,
- connecting means (4) with four eyelets (20), configured to join adjacent main floats (2) to each other, adjacent secondary floats (3) to each other and secondary floats (3) to adjacent main floats (2), and
- connecting devices (5) with two eyelets (21), configured to connect the adjacent secondary floats (3) to each other or to external anchorages.

## Description

### Field of the invention

The present invention relates to a floating system for photovoltaic panels, which serves as a support for photovoltaic panels and can be installed on water or any other liquid medium.

### Background of the invention

There are numerous systems in the prior art consisting of devices that support photovoltaic panels.

Regarding photovoltaic installations on ground or flat roofs, there are prior art documents, such as WO2010097406A2, EP833098A1 or DE102008055627A1, which describe plastic shell-shaped devices with different inclinations on which the photovoltaic panel is placed on top. The connection to the supporting medium requires the design of different complementary foundation systems which, by means of fixed metal anchors, firmly connect the shell-like structures.

In the field of floating installations, the state of the art includes previous documents such as US20140224165A1, EP2549551B1, WO2010064105A2, ES2178516B1 or ES2366960T3. In general, they consist of a floating element of different geometries resolved by means of a hollow and closed plastic part. In the upper part, one or more photovoltaic panels are supported by a metallic or plastic auxiliary structure with different degrees of continuity with the lower float.

Spanish utility model ES1143535U describes a modular float, which can be used in floating solar photovoltaic installations and which is nestable thanks to its concave geometry and open at the top. The union of two plastic modular floats supports both a photovoltaic solar energy module and a plastic or metal top cover by means of specific fastenings on the long and short sides, thus creating a closed, watertight and passable floating unit. This invention also makes it possible to form floating assemblies with several modular floats with photovoltaic modules surrounded by walkway floats, which act as a walkable access path in these installations.

The disadvantage of these floating arrays is that they require complex logistical requirements, especially during the loading and stacking processes for transport.

A floating system for photovoltaic panels is therefore needed to enable improved logistics.

### Summary of the invention

The object of the present invention is therefore to provide a floating system for photovoltaic panels to overcome the drawbacks of the prior art.

The invention provides a floating system for photovoltaic panels, which comprises:
- a series of float-photovoltaic panel assemblies, with one or two main floats for each photovoltaic panel, each photovoltaic panel being configured to be assembled on the corresponding main float or floats, forming a float-photovoltaic panel assembly, such that the float-photovoltaic panel assemblies are arranged in at least one row, each main float having a sloping top surface and a concave central cavity, from the bottom of which protrude protrusions located in the vicinity of its corners,
- a plurality of secondary floats surrounding the rows of float-photovoltaic panel assemblies forming intermediate and lateral corridors,
- connecting means with four eyelets, configured to join adjacent main floats to each other, adjacent secondary floats to each other and secondary floats to adjacent main floats, and
- two-eyelet connecting devices, configured to connect adjacent secondary floats to each other or to external anchorages.

This configuration of the main floats optimises the transport of the system as well as the stacking of the main floats with increased load resistance.

Another advantage of the invention is that it is completely modular, allowing installations of the desired surface area and with a specific geometry to be achieved through the combination of float-panel photovoltaic assemblies and secondary floats.

Another advantage of the invention is that it allows the installation of large photovoltaic panels.

Further advantageous embodiments of the invention are set out in the dependent claims.

### Brief description of the drawings

In the following, the subject matter of the present invention will be illustrated in a nonlimiting manner by reference to the accompanying drawings, wherein:
Figure 1 shows an embodiment of a floating system for photovoltaic panels with one main float per photovoltaic panel.
Figure 2 shows a plan view of the floating system for photovoltaic panels of figure 1.
Figure 3 shows a perspective view of another floating system for photovoltaic panels according to the invention, in a North-South configuration.
Figure 4 shows a perspective view of another floating system for photovoltaic panels according to the invention, in an East-West configuration.
Figure 5 shows an embodiment of a floating system for photovoltaic panels with two main floats per photovoltaic panel.
Figure 6 shows a plan view of the floating system for photovoltaic panels of figure 5.
Figure 7 shows an embodiment of a floating system for photovoltaic panels with one main float per photovoltaic panel.
Figure 8 shows a plan view of the floating system for photovoltaic panels of figure 7.
Figure 9 shows a perspective view of a main float of the floating system for photovoltaic panels of the invention.
Figure 10 shows a side view of the main float of figure 9.
Figure 11 shows a front view of the main float of figure 9.
Figure 12 shows a plan view of the main float of figure 9.
Figure 13 shows a detail of the interior of the main float of figure 9.
Figure 14 shows a detail of a floating system for photovoltaic panels showing the passageway for operation and maintenance between photovoltaic panels in the direction of the short side of the panels.
Figures 15 and 16 show external details of the main float.
Figures 17 to 21 show details of the main float slots and the attachment of photovoltaic panels to the main float.
Figure 22 shows a detail of a corner of a main float.
Figure 23 shows a perspective view of a secondary float.
Figure 24 shows a side view of the secondary float of figure 23.
Figure 25 shows a front view of the secondary float of figure 23.
Figure 26 shows a plan view of the secondary float of figure 23.
Figures 27 and 28 show the secondary float of figure 23 with bolts on its corners.
Figure 29 shows a detail view of figure 27.
Figure 30 shows a floating system for photovoltaic panels with walkways around the photovoltaic panels.
Figure 31 shows a floating system for photovoltaic panels with electrical conduits.
Figure 32 shows secondary floats with fittings or attachment devices for attachment of anchoring and mooring lines of the floating system.
Figure 33 shows secondary floats in use as a floating support for electromechanical equipment.
Figure 34 shows secondary floats in use as a floating conduit and cable evacuation line.
Figure 35 shows a floating system for photovoltaic panels with an arrangement of one row of secondary aisle floats for each row of main floats with photovoltaic panels.
Figure 36 shows a floating system for photovoltaic panels with an arrangement of one row of secondary aisle floats for every two rows of main floats with photovoltaic panels.
Figure 37 shows a floating system for photovoltaic panels with an arrangement of one row of secondary aisle floats every four rows of main floats with photovoltaic panels.
Figures 38 to 40 show various views of a means of connecting main floats to main floats, secondary floats to secondary floats or main floats to secondary floats.
Figures 41 and 42 show a connecting means of figures 38 to 40 between main and secondary floats.
Figures 43 and 44 show a connecting device for use on secondary floats for attachment of anchoring and mooring lines of the floating system.
Figure 45 shows a set of main floats stacked on a pallet for transport.

### Detailed description of the invention

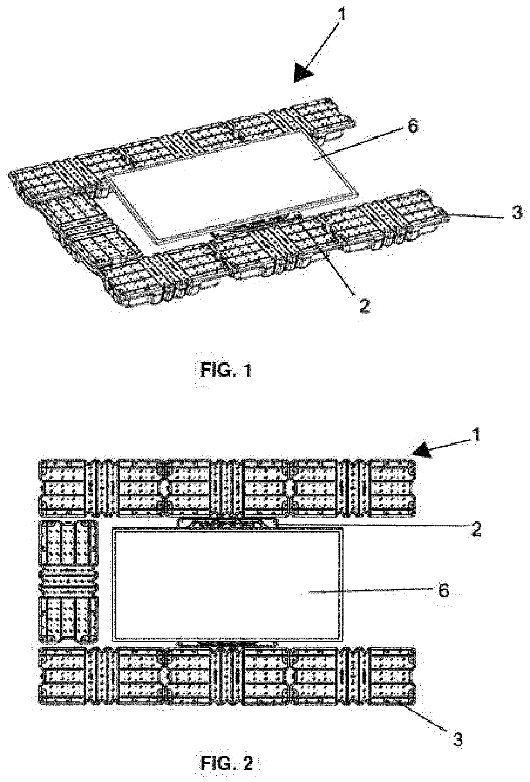

Figures 1, 5 and 7 depict embodiments of floating systems 1 for photovoltaic panels 6 of the invention.

These floating systems 1 for photovoltaic panels 6 comprise:
- a series of float-photovoltaic panel assemblies, with one or two main floats 2 for each photovoltaic panel 6, each photovoltaic panel 6 being configured to be assembled on the corresponding main float(s) 2, forming a float-photovoltaic panel assembly, such that the panel-photovoltaic float assemblies are arranged in at least one row 10, each main float 2 having a sloping top surface 7 and a concave central cavity 8, from the bottom of which protrude protrusions 9 located in the vicinity of its corners,
- a plurality of secondary floats 3 surrounding the rows 10 of panel-photovoltaic float assemblies forming intermediate and lateral corridors 11,
- connecting means 4 with four eyelets 20, configured to join adjacent main floats 2 to each other, adjacent secondary floats 3 to each other and secondary floats 3 to adjacent main floats 2, and
- connecting devices 5 with two eyelets 21, configured to connect the adjacent secondary floats 3 to each other or to external anchors.

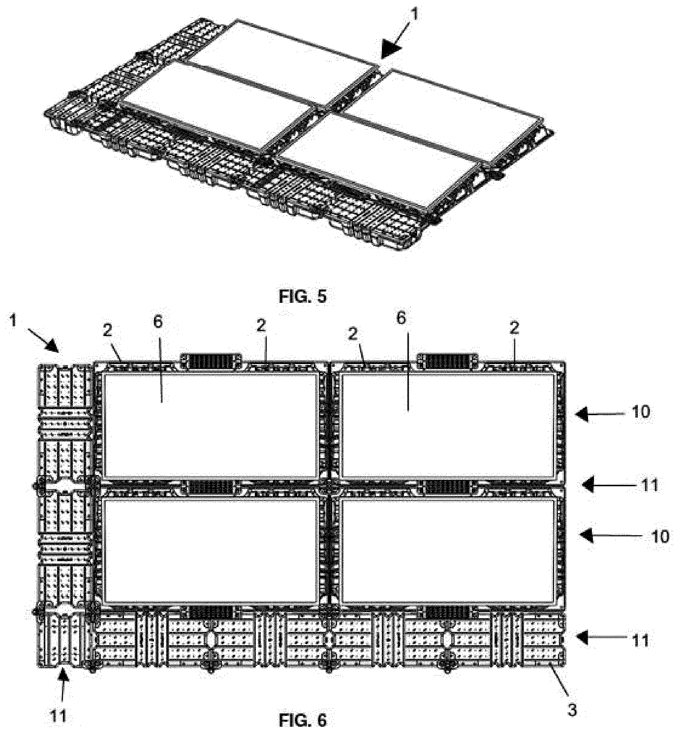

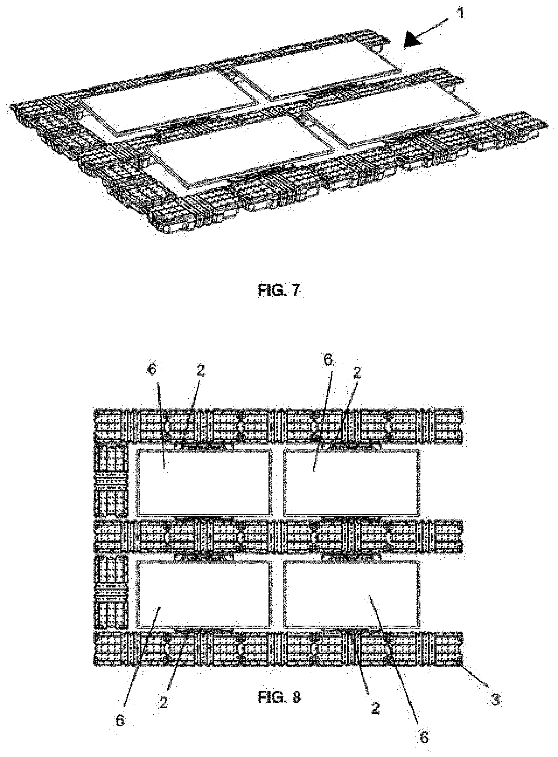

The embodiments of Figures 1 and 7 correspond to the monofloat configuration option (i.e. with one main float 2 per photovoltaic panel 6) and the embodiment of Figure 5 corresponds to the bifloat configuration option (i.e. with two main floats 2 per photovoltaic panel 6).

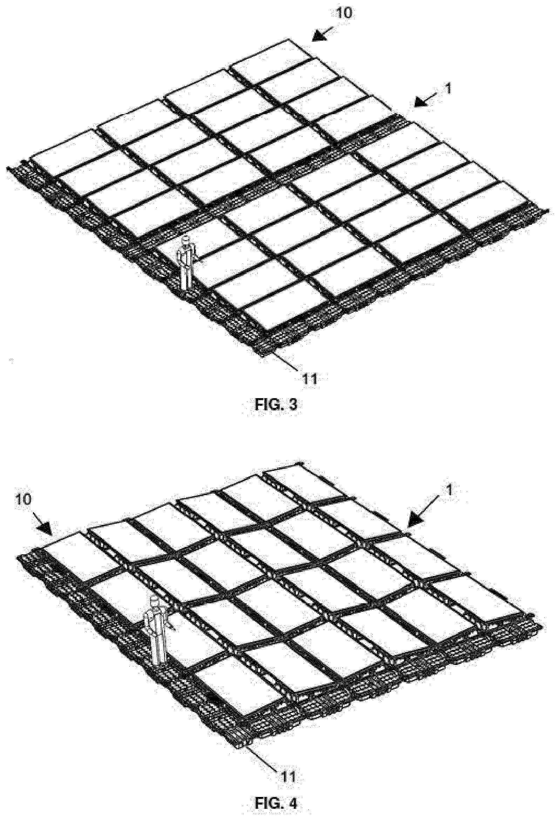

Figure 3 shows a floating system 1 for photovoltaic panels 6 according to the invention, in a North-South configuration. This configuration is bifloating, in such a way that the outer wings of one of the main floats 2, when connected to the adjoining main float 2, provide a maintenance corridor 11 in the North-South direction (figure 6 shows these corridors 11).

Figure 4 shows the maintenance aisles 11 in the East-West direction.

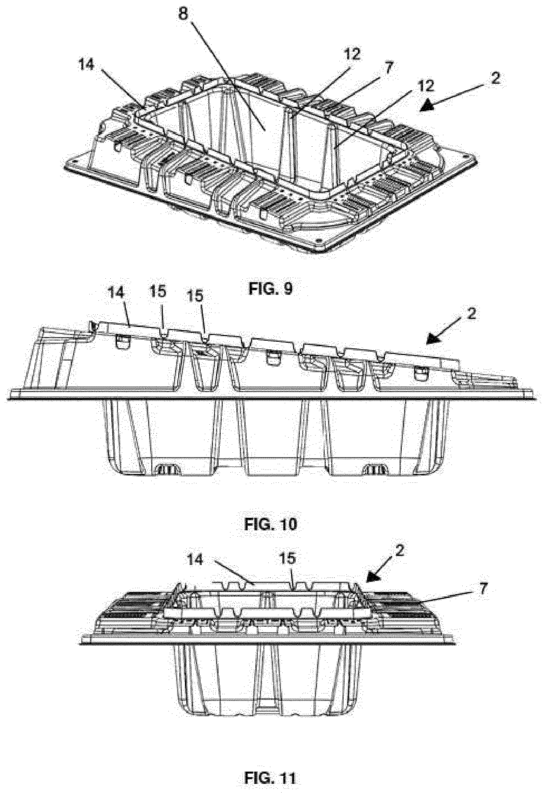

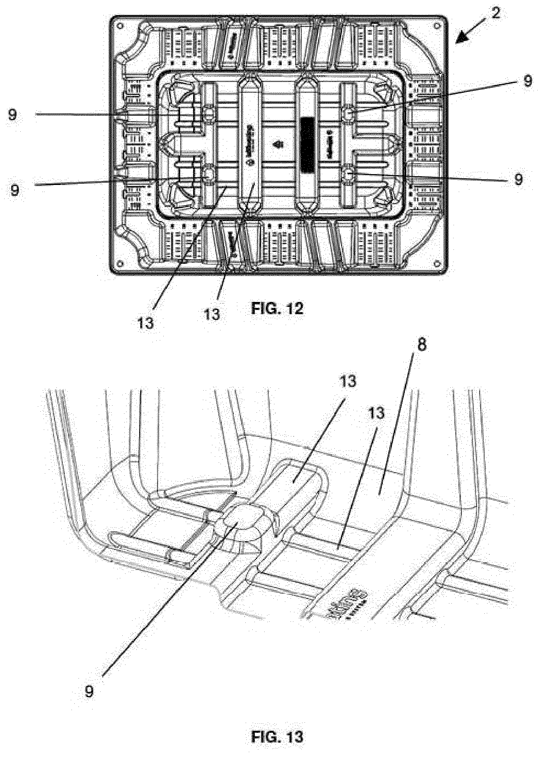

Figures 9-13 and 15-22 are different views of the main float 2 of the floating system 1 for photovoltaic panels 6 of the invention and of details thereof.

Preferably the main floats 2 and the secondary floats 3 are substantially rectangular in plan.

The main float 2 is made of plastic material and has the following characteristics:
- Open modular float with upper perimeter support tray for the photovoltaic panel 6 with an inclination of 5° for both single-water configurations of the photovoltaic panel 6 in a North-South arrangement, as well as gabled or East-West configurations.
- Symmetrical float with variable wall thickness, accurate and precise along the length of the part due to its differentiated plastic manufacturing by injection that allows to increase the thickness in the areas of greater mechanical stresses in operation or with greater exposure to solar radiation and decrease the wall thickness of the plastic part in those areas of lower mechanical requirements and less exposure to solar radiation to optimise the strength/weight ratio of the part.
- Modular float with a concave central cavity 8 that has continuity in height with a perimeter upper tray that allows stacking and nesting of the main float 2 to achieve maximum optimisation in transport thanks to the design of the lower part of the float, to reach a total of 50 units per pallet and 1000 units per 40-foot container.
- Modular float that allows two ways of positioning the large photovoltaic panel 6 on its upper part:
   - Installation mode with bi-float configuration, where two main floats 2 are used to be the support of the photovoltaic panel 6; for this purpose the main floats 2 are placed and flush with the external part of the photovoltaic panel 6 and there is an intermediate gap without plastic in which the photovoltaic panel 6 is in direct contact with the water.
   - Installation mode with single float configuration in which the photovoltaic panel 6 uses only one main float unit 2 which is positioned in the centre of the panel 6 and there are two cantilevered wings or sections on both sides in direct contact with the water.
- Multi-purpose configuration of the main float 2 for both bi-float and mono-float versions for installing large photovoltaic panels 6.
- Hollow modular float that can be closed at the top with a plastic or metal cover to make the assembly hermetic and watertight.

The main float 2 is a hollow plastic part (or in a natural recyclable material such as cork) with a concave central cavity 8 formed by vertical walls with stiffening ribs 12 of variable inertia that are symmetrically positioned along the longitudinal development of the walls of the part both in the central parts and in the four corners. The vertical body formed by these walls is closed at the bottom with a horizontal surface as the bottom of the piece while, in height, the vertical walls have continuity with a perimeter tray or band (inclined upper surface) with the main function of supporting the photovoltaic panel 6 forming an inclined plane of 5°.

The vertical walls have continuity at the bottom of the concave part with a lower part whose outer part will always be in contact with water and/or soil. This lower surface has transversal and longitudinal ribs 13 creating a folded sheet of great structural rigidity at the bottom of the part, while providing the part with high values of resistance to tearing and puncturing against irregular support surfaces both in the installation phase of the system and in operation.

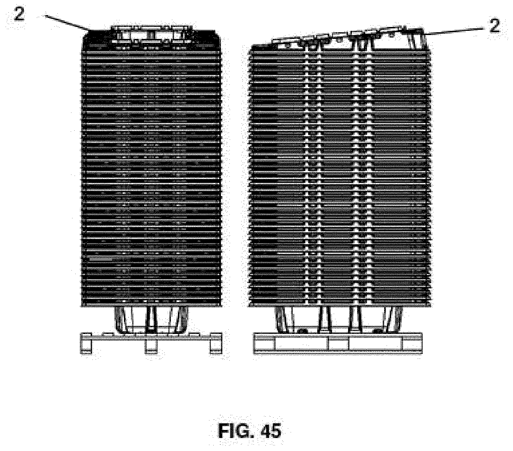

Likewise, the folds and protrusions of this lower part are optimised and have several recesses 9 or bosses that protrude from the middle plane of the bottom of the main float. These parallelepiped-shaped recesses 9 are located at each of the four corners to optimise the stacking of the hollow parts with optimum resistance to withstand a load equivalent to 385 kg, which is 50 floats stacked on a pallet (see figure 45).

On the other hand, the upper part of the piece takes the form of a tray or perimeter band that starts at the maximum height of the vertical walls and opens horizontally about 21 cm on each side, creating an inclined plane with a particular geometry and design characteristics to support the photovoltaic panel or module 6 that is placed on the upper part as a zenithal closure.

This tray or perimeter band has in its central part a continuous vertical projection 14 on the four sides or walls that protrudes above the inclined plane of the tray. Its function is to prevent the entry of drops and splashes of water in wave movements, thanks to the fact that this raised height ensures that the rear part of the photovoltaic panel 6 rests on the said projection 14 or raised height. At the same time, it can be observed that this projection 14 is not uniform in height and has some recesses 15 or oval indentations on each face which are designed to pass the wiring for the connection of the electrical terminals of the photovoltaic panel 6 and thus, to configure the string between photovoltaic panels 6.

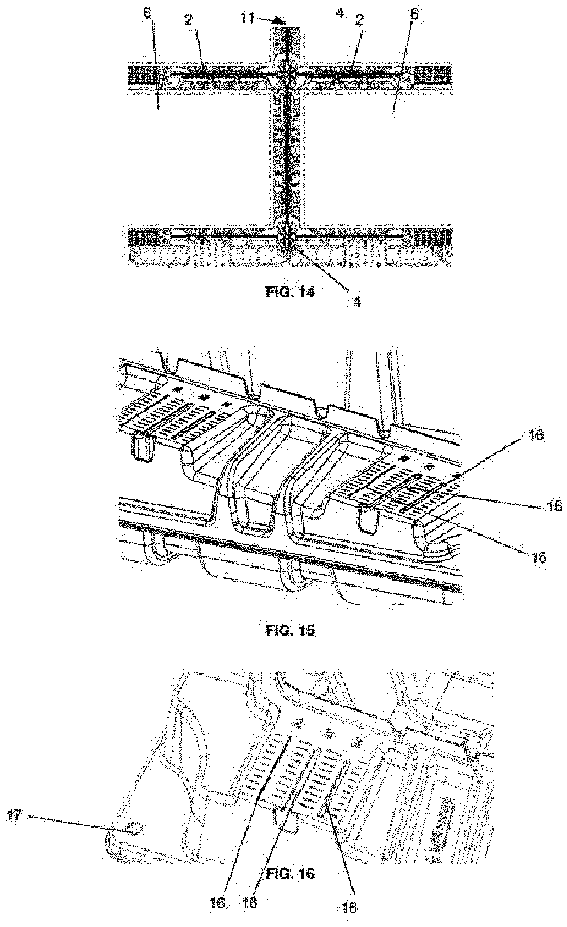

From this projection 14, the tray forms an inclined plane of 5° with a series of differentiating elements that allow three main functions:
- Holding the photovoltaic panel 6 at the specific attachment points.
- To join several floats through the connecting means 4 which is positioned at the four corners of the main float 2.
- Set up a minimum width passageway between panels 6 to allow maintenance work by the operating and maintenance personnel and to allow access to all floats of the plant in a North-South direction (figure 14).

Finally, the 5° inclined plane of the tray folds vertically downwards to form a side wall of the tray which, given its continuity with the 5° inclined plane, has a variable height geometry from its minimum value at the front of the main float 2 to its maximum height at the rear of the main float 2 (figure 10).

These descending side walls of the variable inertia tray are stiffened by means of vertical ribs and grooves that give the tray the necessary robustness to withstand the loads transmitted by the photovoltaic panel 6 and the overload of use caused by the passage of operators along the edge of the perimeter tray in the passage area (figure 15).

The tray inclined at 5° has specific areas on each of its four sides for fixing the photovoltaic panels 6 as shown in figure 16 (three areas on each side).

This specific area for fastening photovoltaic panels 6 is numbered and serialised so that assembly and mounting can be carried out quickly and easily by operators following the assembly instructions. Three zones are arranged on each of the short sides of the main float and three zones on the long side. The specific panel fastening zone has a specific wall thickness to be able to transmit the requested loads in an optimal way to the rest of the main float 2 and, as shown in figure 16, it has three differentiated slots 16 to allow the use of at least the three metallic or plastic fastening means 23 explained below:
- Slot for fixing self-tapping screws
- Slot for fixing hexagonal screws, hammer-head screws or carriage bolts.
- Slot for fastening with rivets.

These fastening areas of the photovoltaic panels 6 allow the use of multiple fastening clip systems to the photovoltaic panels 6 (conventional Z-type clips, lower frame fastening clips, mixed lower and upper fastening systems, and in different materials: aluminium, steel or thermoplastics or thermoplastic composites) and multiple means of attachment 23 or anchoring of the clip systems to the float (rivet, hammer head screws, carriage bolts, self-tapping screws, hexagonal or internal Allen screws, or other types with hexagonal, square or other types of nuts).

It is also noted that, in the central part of the specific panel clamping area, corresponding to the central groove in figure 16, there is a groove in the outer downward vertical wall of the tray that facilitates the maintenance of the fastening for retightening of the clamping means or replacement throughout the operating phase.

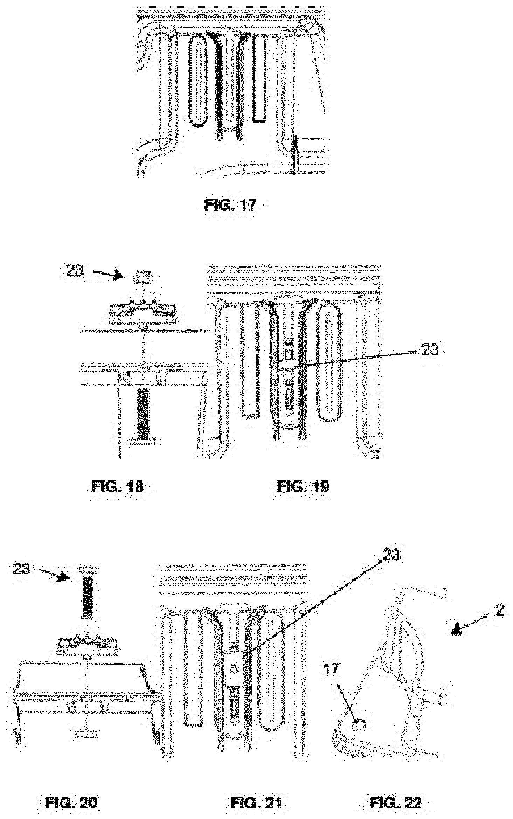

The lower part of the specific photovoltaic panel clamping area 6 has a guide channel to achieve the tightening of the rectangular nut or hammer head screw as shown in figure 17.

At the four ends of the main float 2 is located the junction area between main and secondary floats. Note how the perimeter tray in the corner areas ends in a flat area with an extreme circular hole 17 (figure 22) which is stiffened by gusset plates at the bottom. A screw is inserted into the circular hole 17, with the head of the screw at the bottom and the stem protruding from the top to connect several main floats 2 or secondary floats 3 via a connecting means 4.

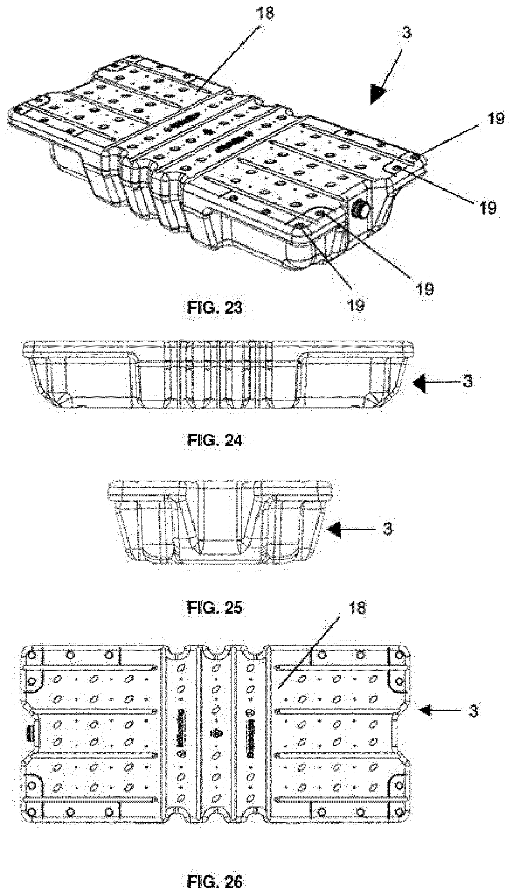

The secondary float 3 (shown in figures 23 to 29) is a hermetic, closed, watertight and symmetrical float, in which its dimensions in plan and elevation are fully compatible and equivalent to the geometry and mounting configuration of the main float 2 that houses the photovoltaic panel 6. This geometric compatibility allows the construction of grids of main floats 2 that are joined or interspersed with secondary floats 3 according to the specific design needs of each floating island or plant.

The secondary floats 3 have holes 19 on their corners on the upper face, as shown in figure 23.

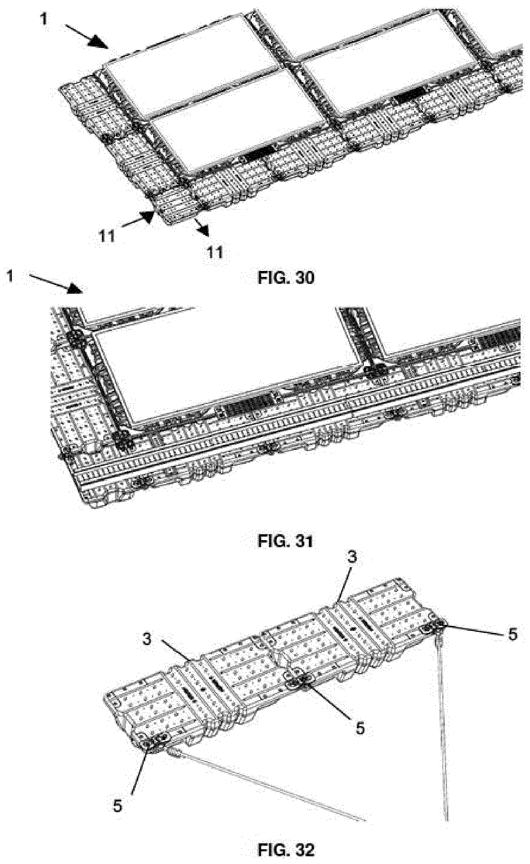

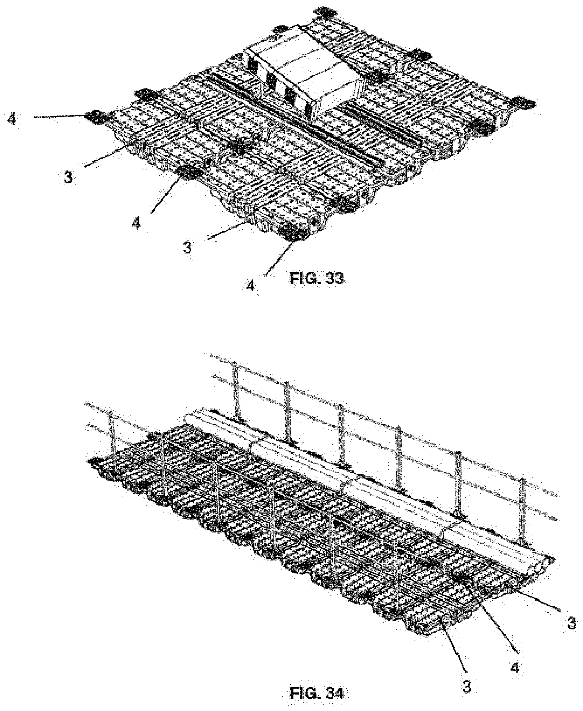

The main functions of the secondary float 3 compatible with the main float 2 are:
- Use as a passageway and access for operation and maintenance tasks according to different configurations and number of aisle alignments with respect to the main floats 2 of photovoltaic panel 6 (figure 30).
- Use as a support for electrical conduits and electrical evacuation routes (figure 31).
- Use as a perimeter edge or barrier for protection and mooring of the floating plant to the specific mooring lines of the solar floating plant (figure 32).
- Use as a floating support for electromechanical equipment such as inverters, junction boxes, etc. (figure 33).
- Use as a floating conduit and evacuation line for laying cabling over the water to land (figure 34).

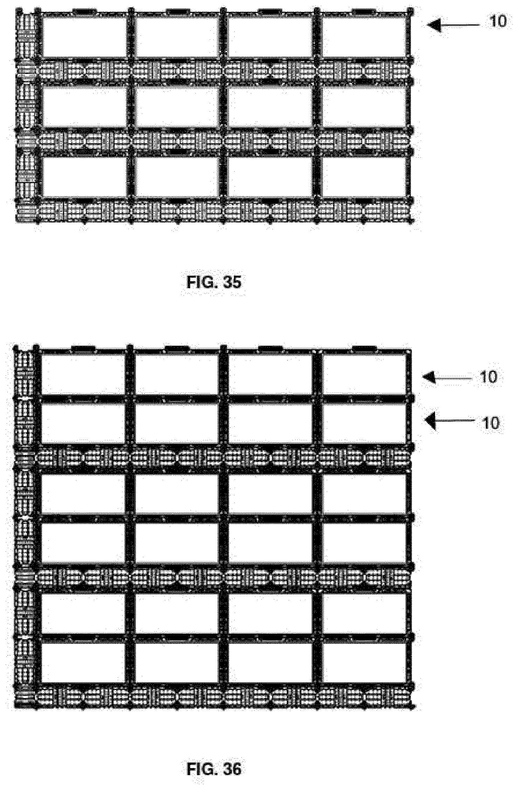

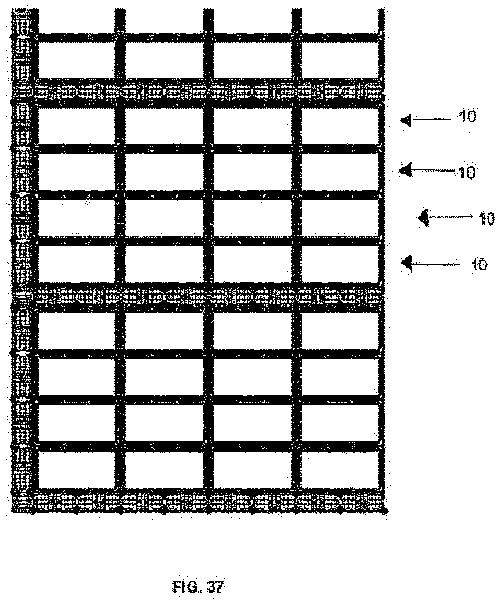

The secondary float 3 is of fixed width and variable length or distance on the long side in order to adjust and be compatible with the different configurations of corridor and passage area that allow the mounting of the main floats 2 of photovoltaic panel 6 in both single and double float versions. The island configurations available depending on the secondary float 3 aisle alignment are:
- One-row configuration (Figure 35): Interleaved and consecutive arrangement of one row of secondary 3 aisle floats for each row of main floats 2 of photovoltaic panel 6.
- Two-row configuration (Figure 36): Arrangement of one row of secondary 3 aisle floats for every two rows of main floats 2 of photovoltaic panel 6.
- Four-row configuration (Figure 37): arrangement of one row of secondary floats 3 of aisle every four rows of main floats 2 of photovoltaic panel 6.

The secondary float 3 is preferably made of a plastic material or a natural recyclable material such as cork, which forms a closed and hermetic volume that can be made by blowing or rotomoulding in a single piece, or by injection moulding two pieces (bottom - bottom and side walls - top cover) that are then joined together.

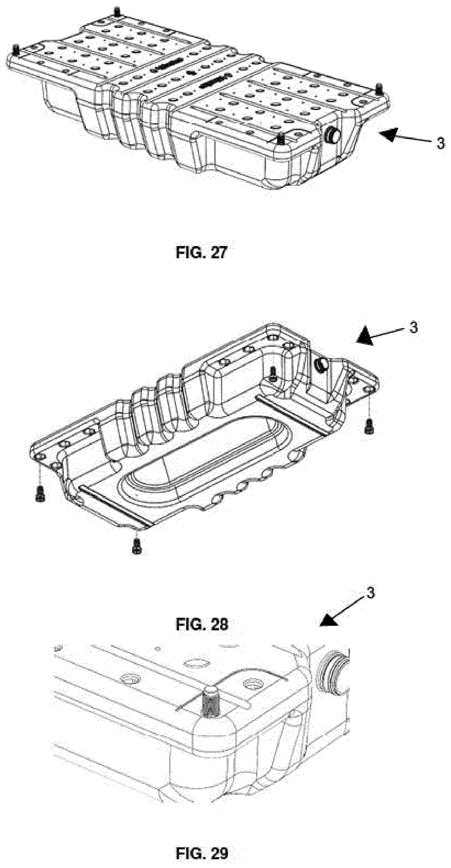

The secondary float 3 has an area of union between secondary floats 3 and main floats 2 in the four corners. This area is characterised by two symmetrical circular recesses per corner where an M20 plastic or metal screw can be fitted, with the head of the screw at the bottom and the shank protruding from the upper plane of the secondary float 3 (Figures 27-29). By means of the connecting means 4 of the present invention, several secondary floats 3 can be joined to each other or to the main floats 2 in order to form the grid structure of the island or floating plant.

Secondary float 3 has a depth that is fully equivalent to the inclined plane at the lowest part of the perimeter tray of main float 2. This uniformity in height allows secondary float 3 to be joined and intercalated with main float 2 as required by means of the connecting means 4 that secondary float 3 has at the four corners.

The general volume of the secondary float 3 is that of a rectangular parallelepiped with a minimum buoyancy of 100 kg and the bottom and vertical walls ribbed to achieve the necessary rigidity in the piece and a flat upper part 18 with a specific serration and tearing of its surface to make it non-slip for the passage of people and to preserve safety in the access and transit through said floats 3.

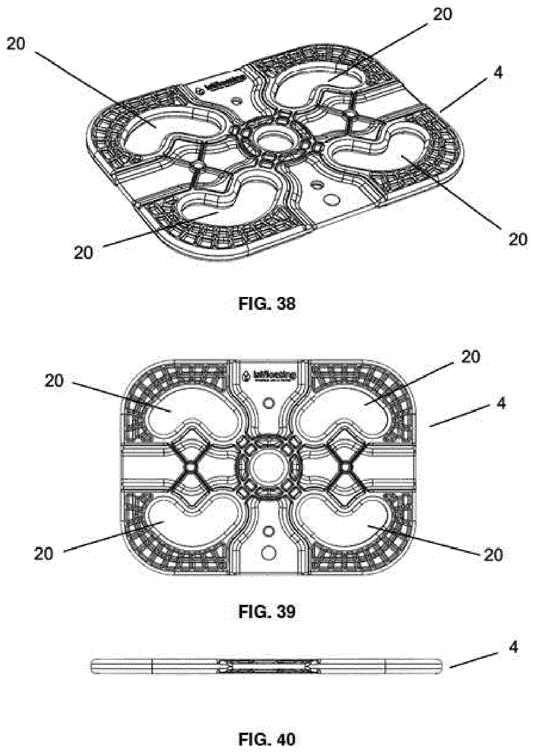

The connecting means 4 or connectors (figures 38 to 40) are the elements capable of joining different main floats 2 with each other or with secondary floats 3, so as to form the structured grid that makes up the floating installation as a whole. These connectors 4 must be partially flexible in order to adapt to the water surface and the waves.

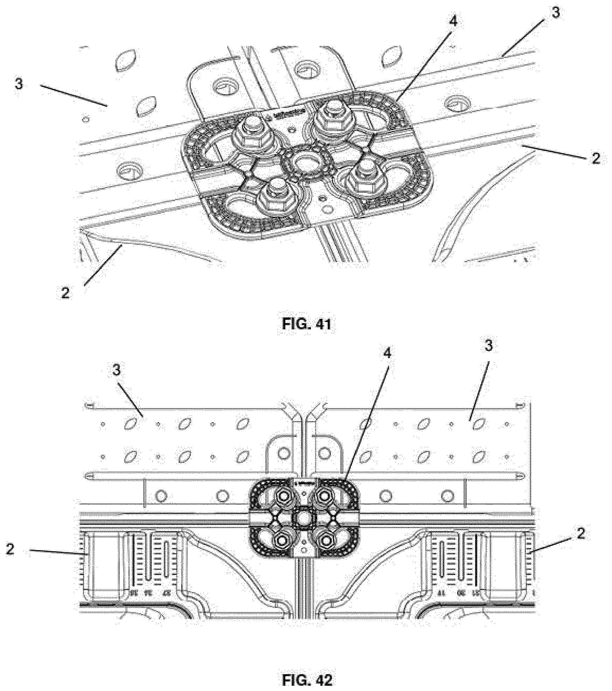

The connecting means 4 between main floats 2 and secondary floats 3 is a three-dimensionally ribbed symmetrical thin plate capable of resisting uniaxial stresses in its plane and with partial bending rotation capacity with respect to its plane in both directions to absorb movements due to waves and the dynamics of the floating plant itself against the rest of the stresses, such as movements due to wind and currents as well as deflections due to gravity loads and operational overloads via the main floats 2 and secondary floats 3 (see figures 41 and 42).

The connecting means 4 is a substantially rectangular part with rounded outer edges, which prevents the critical stress concentration in the connecting elements. Its width or distance on the short side is fixed, while the length or distance on the long side is variable depending on the configuration and mounting of the main floats 2 of photovoltaic panel 6. The variable configuration of the longitudinal dimension of the plate achieves great design versatility, allowing both main floats 2 and secondary floats 3 to be attached to variable sizes of photovoltaic panel 6 within the range and tolerance of the connecting means. This is very important since the market for photovoltaic panels 6 is in continuous evolution and the floating system 1 of the invention has the necessary geometric flexibility to adapt to the evolution of the dimensions of the photovoltaic panels 6.

The connecting means 4 can be in the form of a plate which is made of polyamide with fibres, it is placed in the specific recess or hole that exists at the four ends of both the main float 2 and the secondary float 3 explicitly designed for this purpose. With the help of screws and nuts, the connections are connected to the main floats 2 or secondary floats 3 to join them together and gradually form the floating solar plant as if it were a puzzle.

The connecting means 4 is characterised by four symmetrical, boomerang-shaped ripped eyelets 20, which are reinforced by concentric and radial ribs to the ends. The thickness of the connecting means 4 is variable along the length of the part with greater thicknesses and stiffening elements in the perimeter areas and gradual reduction with 45° angles as the centre of the part is reached.

The four slotted eyelets 20 of the connection means 4 are the point where the shank of the connecting bolts that have previously been inserted in the main float 2 and/or secondary float 3 are inserted to finally complete the connection by tightening from the top with the specific nuts until the established tightening torque is achieved.

The dimensions of the screws and nuts have been designed in such a way that standardized screws and nuts can be used if necessary.

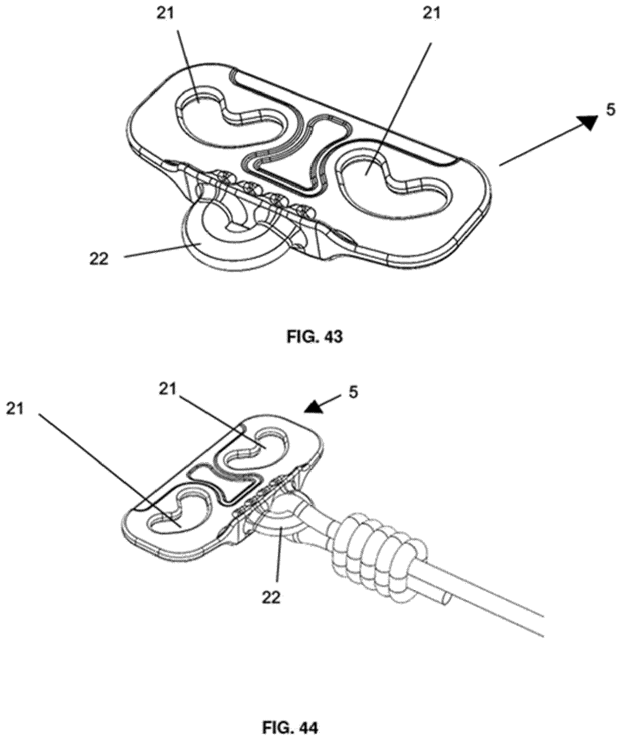

The connecting devices 5 shown in figures 43 and 44 are rectangular-shaped pieces with rounded edges. They have the specific function of joining two consecutive secondary floats 3 of the outer protection barrier through nut and bolt sets to be housed in the two slotted eyelets 21 that it has in its central part arranged symmetrically. Figures 31 and 32 also show these connecting devices 5 already mounted on a floating system 1.

At the same time, in the intermediate part of the long side of the piece there is a semicircular ring 22 with rounded edges that serves as an anchoring and holding point for the anchoring and mooring lines of the solar floating plant. The designed geometry acts as a thimble to anchor the mooring lines safely and durably.

This ring 22 is embedded in the centre of the rectangular part of the plate and strongly stiffened with gusset plates that reduce the bending to be transmitted to the rectangular part of the plate.

The eyelet 22 has greater wall thicknesses to be able to satisfactorily resist the horizontal pulling forces. It can be seen that ring 22 allows free rotation of the mooring line attachment means in both the vertical and horizontal plane due to its geometry and rounded edges.

Although some embodiments of the invention have been described and depicted, it is clear that modifications within the scope of the invention may be made thereto, and the scope of the invention is not to be considered as limited to these embodiments, but only to the contents of the following claims.

## Claims

1. Floating system (1) for photovoltaic panels (6), **characterised in that** it comprises:
- a series of float-photovoltaic panel assemblies, with one or two main floats (2) for each photovoltaic panel (6), each photovoltaic panel (6) being configured to be assembled on the corresponding main float(s) (2), forming a float-photovoltaic panel assembly, such that the float-photovoltaic panel assemblies are aligned in at least one row (10), each main float (2) having an inclined upper surface (7) and a concave central cavity (8), from the bottom of which protrude protrusions (9) located in the vicinity of its corners,
- a plurality of secondary floats (3) surrounding the rows (10) of float-photovoltaic panel assemblies forming intermediate and lateral corridors (11),
- connecting means (4) with four eyelets (20), configured to join adjacent main floats (2) to each other, adjacent secondary floats (3) to each other and secondary floats (3) to adjacent main floats (2), and
- connecting devices (5) with two eyelets (21), configured to connect the adjacent secondary floats (3) to each other or to external anchorages.

2. Floating system (1) for photovoltaic panels (6), according to claim 1, wherein the main floats (2) and the secondary floats (3) are substantially rectangular in plan and made of plastic or cork material.

3. Floating system (1) for photovoltaic panels (6), according to any of the previous claims, in which the concave central cavity (8) of the main floats (2) has stiffening ribs (12) on its lateral walls and the bottom of the concave central cavity (8) of the main floats (2) has transversal and longitudinal ribs (13).

4. Floating system (1) for photovoltaic panels (6), according to any of the previous claims, in which the main floats (2) have on their upper inclined surface (7) a vertical projection (14) that surrounds the central concave cavity (8) and which includes some recesses (15).

5. Floating system (1) for photovoltaic panels (6), according to any of the previous claims, in which the inclined upper surface (7) has fixing areas for the photovoltaic panels (6) with several slots (16).

6. Floating system (1) for photovoltaic panels (6), according to claim 7, in which one of the slots (16) has continuity along the corresponding outer descending wall.

7. Floating system (1) for photovoltaic panels (6), according to any of the previous claims, in which the main floats (2) have holes (17) on a flat area close to their corners.

8. Floating system (1) for photovoltaic panels (6), according to any of the previous claims, in which the secondary float (3) is a piece with a closed and hermetic volume.

9. Floating system (1) for photovoltaic panels (6), according to any of the previous claims, in which the secondary floats (3) have a non-slip upper surface (18), with serrations and tears.

10. Floating system (1) for photovoltaic panels (6), according to any of the previous claims, in which the secondary floats (3) have holes (19) on their corners on the upper face.

11. Floating system (1) for photovoltaic panels (6), according to claim 10, wherein the secondary floats (3) additionally have several holes near the edges on the upper face.

12. Floating system (1) for photovoltaic panels (6), according to any of the previous claims, wherein the connection means (4) are thin plates with four symmetrical slotted eyelets (20).

13. Floating system (1) for photovoltaic panels (6), according to any of the previous claims, wherein the connecting devices (5) are rectangular shaped pieces with two symmetrical slotted eyelets (21).

14. Floating system (1) for photovoltaic panels (6), according to claim 13, wherein the connecting device (5) additionally comprises a semicircular ring (22) for anchoring the system to the bottom of the medium in which it is placed or for anchoring it to the outside of said medium.

15. Floating system (1) for photovoltaic panels (6), according to any of the previous claims, in which the photovoltaic panels (6) are assembled on the corresponding main float or floats (2) by means of fixing means (23).
